Europäisches Patentamt

European Patent Office

Office européen des brevets

(19)

(11) Veröffentlichungsnummer: **0 025 848**
**B1**

(12) # EUROPÄISCHE PATENTSCHRIFT

(45) Veröffentlichungstag der Patentschrift: 13.06.84

(51) Int. Cl.³: **B 62 D 49/06,** B 60 K 17/28

(21) Anmeldenummer: 80104669.9

(22) Anmeldetag: 07.08.80

(54) Selbstfahrende Maschine mit Arbeitsgeräten, insbesondere Landmaschine.

(30) Priorität: 31.08.79 DE 2935274

(43) Veröffentlichungstag der Anmeldung:
01.04.81 Patentblatt 81/13

(45) Bekanntmachung des Hinweises auf die Patenterteilung:
13.06.84 Patentblatt 84/24

(84) Benannte Vertragsstaaten:
BE CH DE FR GB IT LI NL SE

(56) Entgegenhaltungen:
DE - B - 1 121 938
DE - B - 1 174 177
DE - C - 943 744
FR - A - 1 104 422
FR - A - 1 219 000
FR - A - 1 255 151
FR - A - 1 270 202
FR - A - 1 319 642
FR - A - 2 066 341
FR - A - 2 103 955
FR - A - 2 337 985
GB - A - 1 326 212
US - A - 2 062 194
US - A - 3 209 604

(73) Patentinhaber: Alois Pöttinger Maschinenfabrik GmbH
A-4710 Grieskirchen (AT)

(72) Erfinder: Raucher, Sigmund, Ing.
Sonnfeldsiedlung 24
A-4710 Grieskirchen (AT)
Erfinder: Silberbauer, Herbert, Ing.
Traunegg 7
A-4600 Wels/Thalheim (AT)

(74) Vertreter: Patentanwälte Dipl.-Ing. A. Grünecker,
Dr.-Ing. H. Kinkeldey, Dr.-Ing. W. Stockmair,
Dr. rer. nat. K. Schumann, Dipl.-Ing. P.H. Jakob,
Dr. rer. nat. G. Bezold Maximilianstrasse 58
D-8000 München 22 (DE)

Courier Press, Leamington Spa, England.

Beschreibung

Die Erfindung betrifft eine selbstfahrende Maschine mit Arbeitsgeräten, insbesondere Landmaschine, mit mindestens zwei Fahrachsen und mit einem etwa oberhalb der vorderen Fahrachse angeordneten Führerstand sowie mit einem etwa oberhalb der hinteren Fahrachse angeordneten Antriebsmotor, der einerseits zum Antrieb eines Energiewandlers als Kraftquelle für den Antrieb mindestens einer Fahrachse und andererseits zum Antrieb mindestens eines vom Selbstfahrer getragenen, geschobenen oder gezogenen Arbeitsgerätes dient, indem die Hauptwelle des Antriebsmotors auf einer Verlängerung eine Abtriebs-Riemenscheibe trägt, die über einen Riementrieb mit einer zum Antrieb des Arbeitsgeräts dienenden Antriebs-Riemenscheibe in Verbindung steht, von der etwa in Längsrichtung des Selbstfahrers eine Antriebswelle für das Arbeitsgerät abzweigt.

Eine bekannte Maschine dieser Art (US—A—4 060 960) ist als Mähdrescher ausgebildet. Der gesamte Aufbau und die Antriebsvorrichtung sind so ausgestaltet, daß sie nur einem einzigen Zweck dienen können. Dabei ist der Riementrieb von der Abtriebs-Riemenscheibe nach oben auf die Antriebs-Riemenscheibe für das Arbeitsgerät geführt, wodurch im mittleren, oberen Bereich des Selbstfahrers erheblich Platz beansprucht wird. Dies ist so lange nicht störend, wie die Maschine nur für einen einzigen Einsatzzweck vorgesehen ist, im Fall der bekannten Maschine ausschließlich als Mähdrescher. Wenn aber die selbstfahrende Maschine so ausgebildet werden soll, daß sie universell einsetzbar ist, d. h. mit unterschiedlichen, auswechselbaren Arbeitsgeräten ausgestattet werden soll, ergeben sich einerseits Schwierigkeiten, weil Antrieb und Getriebe eines solchen Selbstfahrers einen beträchtlichen Raum einnehmen und für die Anbringung mehrerer und unterschiedlicher Arbeitsgeräte störend sind, zum anderen, weil solche Universalgeräte nahezu über das ganze Jahr einsetzbar sind und infolgedessen sehr hohen Beanspruchungen unterliegen.

Ferner muß auch der Energiewandler für den Fahrantrieb aus diesen Platzgründen möglichst ortsunabhängig angeordnet sein, ohne daß sich Biegebeanspruchungen, denen die Hauptwelle des Antriebsmotors und deren Verlängerung bei der verhältnismäßig großen Leistung, die auf die Arbeitsgeräte übertragen werden muß, ausgesetzt sind, auf den Antrieb des Energiewandlers nachteilig auswirken. Bei der selbstfahrenden Maschine gemäß US—A—4 060 960 arbeitet die Motorwelle einerseits auf die Abtriebs-Riemenscheibe für den Antrieb des Arbeitsgerätes und andererseits parallel dazu über ein Zahnradgetriebe auf den als Hydraulikpumpe ausgebildeten Energiewandler für den Fahrantrieb. Damit wirken sich Biegebeanspruchungen, die durch den eine verhältnismäßig große Leistung übertragenden Riementrieb auf die Motorwelle und deren Verlängerung ausgeübt werden, unmittelbar auf das Zahnradgetriebe und damit den Antrieb der Hydraulikpumpe aus.

Die GB-A 1 156 762 zeigt eine landwirtschaftliche Maschine, bei der der gesamte Antrieb insbesondere im mittleren Bereich der Maschine unter Inanspruchnahme sehr großen Bauraumes weit nach oben ausladend angeordnet ist. Der quer eingebaute Motor dient nicht nur zum Antrieb der Arbeitsgeräte, sondern auch zum Antrieb des Fahrwerks, ohne daß hierfür ein ortsunabhängiger Energiewandler vorgesehen wäre. Es ist eine ganze Reihe von Riementrieben und in alle Richtungen geführten Gelenkwellen erforderlich, die nur noch wenig Platz für den Einbau von Arbeitsgeräten lassen. Die Kraftübertragung für die Arbeitsgeräte erfolgt von der Hauptwelle des Antriebsmotors zunächst nach unten auf eine Riemenscheibe, von dieser über einen Riemen weiter nach oben auf eine weitere Riemenscheibe, von dieser über eine quer zur Fahrtrichtung eingebaute Gelenkwelle auf ein Getriebe und von diesem über zwei weitere Gelenkwellen nach vorn und nach hinten zu den Zapfwellen.

Gegenstand der AT—A—231 285 ist ein Schlepper, dessen Motor kurz hinter der Vorderachse angeordnet ist und sowohl die hinteren Antriebsräder als auch ein Mähwerk antreibt. Für den Antrieb des Mähwerks ist ein Riemengetriebe vorgesehen, bei dem über einen Riemen eine unterhalb der Motorwelle gelagerte Zwischenwelle angetrieben wird, welche ihrerseits über einen weiteren Riemen eine Mähwerkseingangswelle antreibt, die seitlich neben dem Motor liegt und in Fahrrichtung nach hinten geführt ist, und bei dem die Antriebs-Riemenscheibe auf einer zur Abtriebs-Riemenscheibe hin bewegbaren Konsole gelagert ist.

Ausgehend von dem eingangs genannten, gattungsbildenden Stand der Technik liegt der Erfindung die Aufgabe zugrunde, die selbstfahrende Maschine so auszubilden, daß sie als Universalmaschine in der Landwirtschaft eingesetzt werden kann.

Erfindungsgemäß wird diese Aufgabe dadurch gelöst, daß die Antriebs-Riemenscheibe etwa in Höhe der Fahrachsen unterhalb der Abtriebs-Riemenscheibe angeordnet, auf einer zur Antriebs-Riemenscheibe hin bewegbaren Konsole gelagert und leicht trennbar mit mindestens einer Gelenkwelle zum Antrieb eines Arbeitsgerätes oder einer Zapfwelle verbunden ist und daß die Verlängerung der Hauptwelle des Antriebsmotors im Kraftfluß gesehen nach der Abtriebs-Riemenscheibe den einen Bestandteil eines hydraulischen, hydroelektrischen oder elektrischen Antriebs bildenden Energiewandler antreibt.

Für den vorgesehenen Einsatz des Selbstfahrers als Universalmaschine, die mit mehreren, unterschiedlichen Arbeitsgeräten ausgestattet werden kann, ist die weit nach unten gezogene Verlagerung der Antriebs-Riemenscheibe für den damit ebenfalls tief unten liegenden Antrieb der Arbeitsgeräte äußerst platzsparend, so daß zum Anbringen der Arbeitsgeräte genügend Raum im oberen Bereich der Maschine zur Verfügung steht. Damit sind auch die Gelenkwellen für den Antrieb der Arbeitsgeräte von unten her leicht zugänglich und können nach Bedarf ohne Schwierigkeiten ausgewechselt werden.

Ein weiterer Vorteil besteht darin, daß die Hauptwelle des Antriebsmotors nunmehr unmittelbar zunächst auf die Abtriebs-Riemenscheibe wirkt, über die die erhebliche Leistung zum Antrieb der Arbeitsgeräte abgenommen werden kann, und erst dann auf die Antriebsachse für den Energiewandler. Da der Energiewandler ortsunabhängig ist, kann er über eine Gelenkwelle oder—wegen der verhältnismäßig geringen zu übertragenden Leistung für den Fahrantrieb—auch über eine biegsame Welle angetrieben werden. Verformungsbelastungen des Riementriebs für den Antrieb der Arbeitsgeräte wirken sich somit nicht auf den Antrieb des Energiewandlers aus.

Jede Gelenkwelle kann mit einem als Zapfwelle dienenden Ende versehen sein, so daß auch mehrere Arbeitsgeräte gleichzeitig auf oder an der selbstfahrenden Maschine angebracht werden können.

Zur universellen Einsetzbarkeit der Maschine ist es besonders günstig, wenn dabei zwischen der Zapfwelle und der Gelenkwelle ein Getriebe eingeschaltet ist.

Der Antrieb der Arbeitsgeräte ist infolge des vorgesehenen Riementriebs mit einfachstem Aufwand bei durchlaufendem Antrieb für die Fahrachsen abschaltbar. Damit während des Fahrens auch die Drehrichtung des Antriebs für die Arbeitsgeräte umgekehrt werden kann, ist es möglich, sowohl der Abtriebs-Riemenscheibe als auch der Antriebs-Riemenscheibe je ein Reibrad zuzuordnen, wobei die Reibräder bei einem Bewegen der Konsole bei ununterbrochenem Fahrantrieb ein die Drehrichtung des Antriebs für die Arbeitsgeräte umkehrendes Reibradgetriebe bilden.

Ein Riementrieb mit einem solchen, die Drehrichtung umkehrenden Reibradgetriebe ist durch DE—A—25 28 828 bei einem Feldhäcksler als Antrieb der Messerwelle bzw. der Einzugsvorrichtung bekannt. Dort kann die Einzugsvorrichtung vom Antrieb abgeschaltet oder in der Drehrichtung umgekehrt werden, während die Messerwelle durchlaufend angetrieben wird.

Bei einer selbstfahrenden Maschine ist jedoch ein solcher umkehrbarer Riemenantrieb noch nicht eingebaut worden, so daß der Antrieb der Fahrachsen unbeeinflußt bleibt und außerdem der Gesamtantrieb einer solchen selbstfahrenden Maschine besonders raumsparend gestaltet wird.

In der Zeichnung sind Ausführungsbeispiele der Erfindung schematisch dargestellt. Dabei zeigen:

Fig. 1 die Seitenansicht der Landmaschine in einer einfachen Ausgestaltung,
Fig. 2 eine Seitenansicht der Landmaschine in einer erweiterten Ausgestaltung,
Fig. 3 eine Draufsicht auf die Landmaschine nach Fig. 1,
Fig. 4 eine Seitenansicht der Landmaschine nach Fig. 2 mit angebauten Arbeitsgeräten,
Fig. 5 eine Draufsicht auf die Landmaschine gemäß Fig. 4,
Fig. 6 eine Vorderansicht der Landmaschine nach Fig. 4,
Fig. 7 eine Seitenansicht der Landmaschine mit einem anderen Arbeitsgerät,
Fig. 8 eine Draufsicht auf die Landmaschine gemäß Fig. 7,
Fig. 9 eine Seitenansicht der Landmaschine mit zum Teil eingebauten und zum Teil angehängten Bearbeitungsgeräten,
Fig. 10 und 11 in größerem Maßstab den Riementrieb in Vorder- und Seitenansicht.

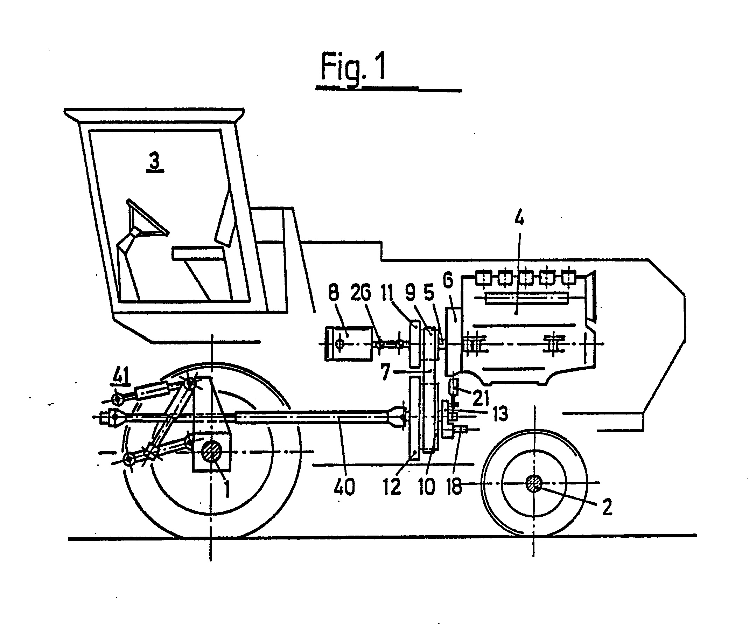

Wie auf Fig. 1 ersichtlich, weist die selbstfahrende Landmaschine eine vordere angetriebene Fahrachse 1 und eine hintere, nichtangetriebene Fahrachse 2 auf, wobei die litztere mit lenkbaren Rädern versehen ist (nicht gezeichnet). Im vorderen Bereich der Maschine ist etwa oberhalb der angetriebenen Fahrachse 1 ein Führerstand 3 vorgesehen, so daß der Fahrer einen besonders guten Überblick von seinem Sitz aus hat.

Im Heckbereich der Maschine ist ein Antriebsmotor 4 eingebaut und zwar in Form eines Otto- oder Dieselmotors entsprechender Leistung (beispielsweise etwa 250 PS).

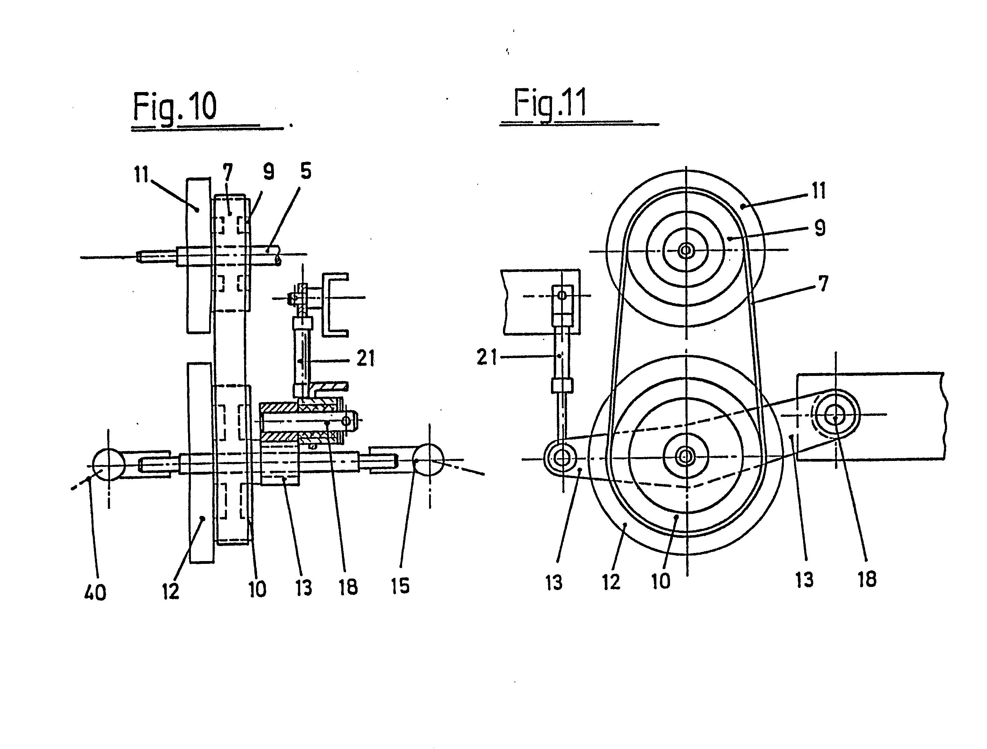

Am nach vorne gerichteten Ende des Antriebsmotors ist eine Wellenkupplung 6 angeflanscht. Dort tritt außerdem eine Verlängerung der Hauptwelle 5 des Antriebsmotors aus. Auf dieser Verlängerung ist dicht vor der Wellenkupplung 6 eine Abtriebriemenscheibe 9 aufgekeilt, die über einen insgesamt mit 7 bezeichneten Keilriementrieb mit einer Antrieb-Keilriemenscheibe 10 in Verbindung steht. Die Antrieb-Keilriemenscheibe 10 ist an einer Konsole 13 gelagert, die mittels einer parallel zur Hauptwelle 5 des Antriebsmotors verlaufenden Achse 18 schwenkbar gelagert ist. (Fig. 10 und 11).

An der Konsole 13 greift eine Zylinder-Kolbeneinheit 21 an, die sich an einem maschinenfesten Widerlager abstützt. Es kann sich dabei um eine pneumatische oder hydraulische Zylinder-Kolbeneinheit handeln, deren Kolben doppeltwirkend ausgebildet ist.

Unmittelbar neben der Abtriebskeilriemenscheibe 9 ist auf der Verlängerung der Hauptwelle 5 des Antriebsmotors 4 ein Reibrad 11 aufgekeilt. Dazu fluchtend ist auf der Achse der Antriebkeilriemenscheibe 10 ein Reibrad 12 größeren Durchmessers in einem gewissen Abstand zum ersten Reibrad 11 befestigt.

Die Achse der Antrieb-Keilriemenscheibe 10 ist mit einer Gelenkwelle 40 verbunden; diese etwa in Fahrtrichtung weisende Gelenkwelle 40 ist bis zu Frontseite der Maschine geführt, so daß das vordere Ende zum Antrieb von Arbeitsgeräten dienen kann. Die Gelenkwelle 40 ist in der üblichen Art und Weise teleskopartig ausziehbar ausgebildet. Sie befindet sich dicht über der angetriebenen Fahrachse 1, d.h. in einer besonders günstigen Lage.

Im Bereich des vorderen Endes dieser Teleskopwelle 40 ist an der Maschine ein Dreipunkt-Hubwerk 41 bekannter Bauart für ein Bearbeitungsgerät vorgesehen.

Die Verlängerung der Hauptwelle 5 des Motors tritt aus dem Reibrad 11 aus und treibt von dort aus über eine Gelenkwelle 26 eine Hydraulikpumpe 8, die infolgedessen in der Maschine so angebracht werden kann, wie dies die Ortsverhältnisse am besten erlauben.

Diese in Kraftflußrichtung nach dem Keilriementrieb 7 für die Arbeitsgeräte angeordnete Hydraulikpumpe 8 dient als Kraftquelle zum Antrieb der Fahrzeugachse 1 mittels eines bekannten Hydromotors.

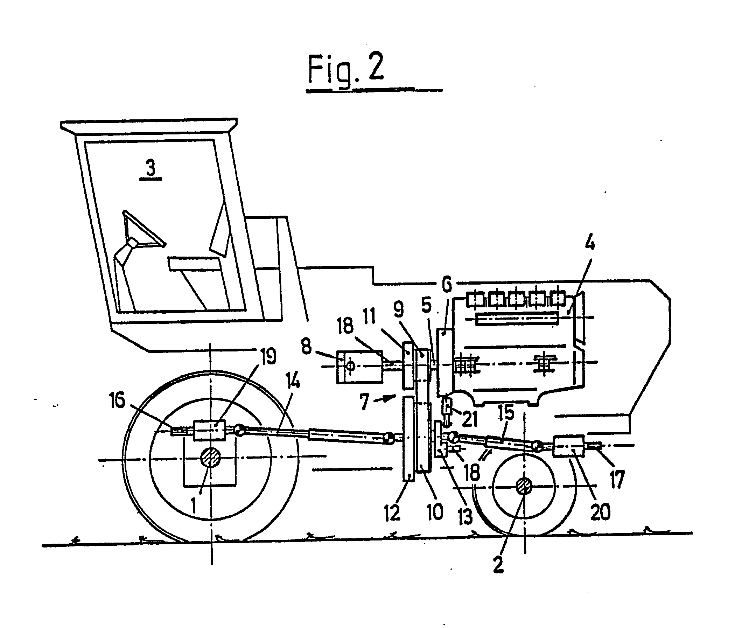

Die Landmaschine nach Fig. 2 stimmt in den wesentlichen Teilen mit der Landmaschine nach Fig. 1 überein. Sie stellt aber insofern eine Weiterbildung derselben dar, als von der Achse der Antrieb-Riemenscheibe 10 einerseits in Fahrtrichtung gesehen nach vorne eine längenveränderliche Gelenkwelle 14 abzweigt, andererseits aber auch eine weitere, in Fahrtrichtung gesehen nach hinten weisende zweite Gelenkwelle 15, deren Ende sich etwa im Bereich der zweiten Fahrachse 2 befindet.

Das freie Ende der Gelenkwelle 14 treibt über Getriebe 19 einen vorderen Zapfwellenanschluß 16, während die hintere Gelenkwelle 15 über ein Getriebe 20 einen hinteren Zapfwellenanschluß 17 in Drehung versetzt.

Bei dem Ausführungsbeispiel nach Fig. 2 ist im übrigen die Hauptwelle 5 des Antriebsmotors 4 mit einer weiteren Verlängerung 18 versehen, die die Hydraulikpumpe 8 unmittelbar antreibt. Dadurch wird der Gesamtantrieb konstruktiv noch weiter vereinfacht.

Zu erwähnen ist noch, daß jedes der Getriebe 19 bzw. 20 auch mehrere Zapfwellenanschlüsse aufweisen kann.

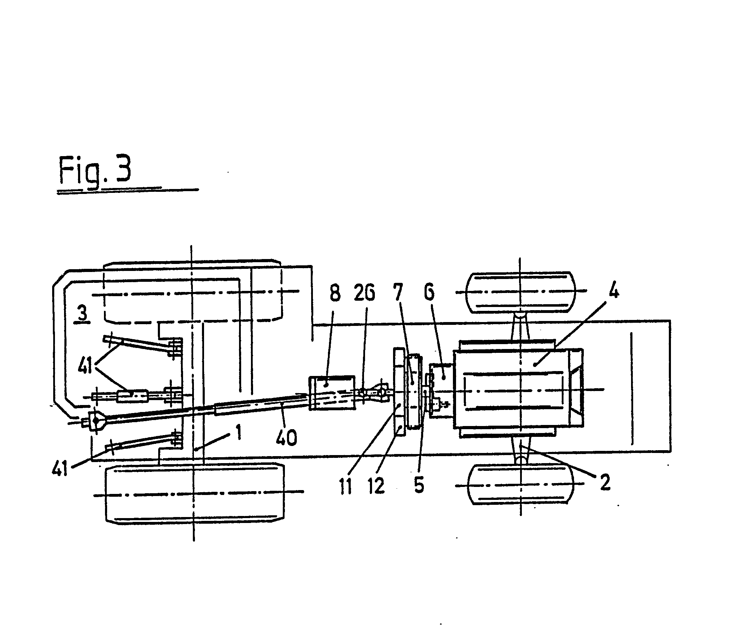

Wie aus Fig. 3 ersichtlich, kann die Gelenkwelle 40 durch eine geringe Schrägstellung so zum Vorderende der Maschine geführt werden, daß dadurch die Funktion anderer notwendiger Teile der Maschine nicht beeinträchtigt wird. Dies gilt selbstverständlich auch für die Gelenkwellen 14 und 15 gemäß Fig. 2.

Dadurch, daß die Antriebskeilriemenscheibe 10 verhältnismäßig tief in der Landmaschine angeordnet ist und von ihr ohne zusätzliche Übertragungsmittel die Gelenkwellen nach vorne und nach hinten abzweigen können, ergibt sich eine außerordentlich einfacher und robuster Aufbau des Antriebs der Arbeitsgeräte. Außerdem ist der Antrieb zu Reparaturzwecken, beispielsweise zum Auswechseln der Keilriemen 7 sehr gut zugänglich. Die Gelenkwellen 40 bzw. 14 bzw. 26 oder die Verlängerung 18 kann vom Reibrad 11 bzw. vom Reibrad 12 durch Lösen weniger Schrauben leicht getrennt werden, so daß das Auswechseln der Keilriemen 7 rasch und ohne besondere Fachkenntnisse erfolgen kann.

Die Konsole 13 ist ebenfalls etwa in Höhe einer Fahrachse angebracht, so daß sie von unten her sehr gut zugänglich ist.

Wenn der Antriebsmotor 4 wie in den gezeichneten Beispielen oberhalb der Konsole 13 gelagert ist, so sind alle seine Teile für eine Wartung von oben praktisch frei zugänglich.

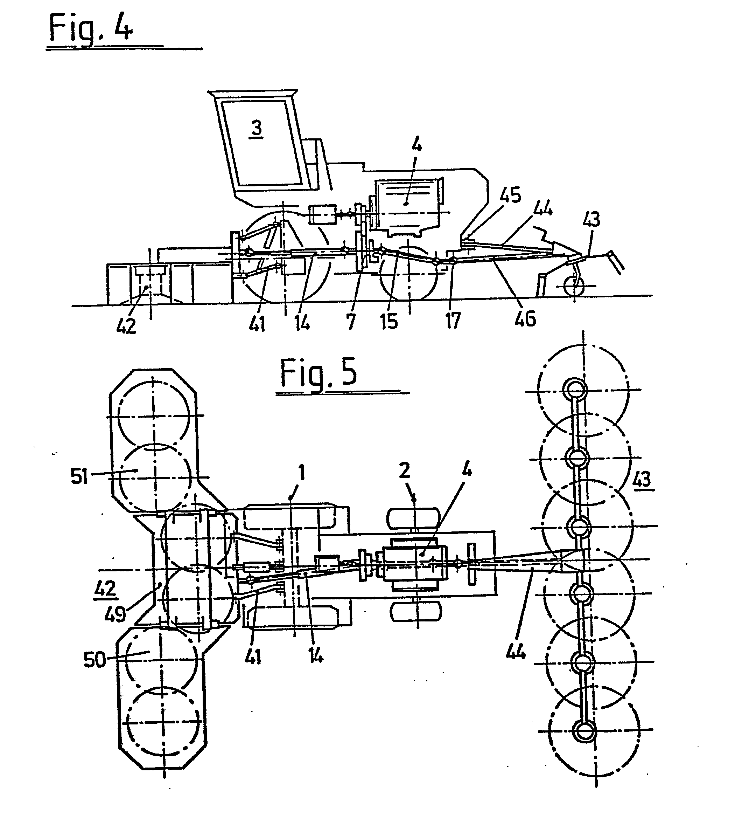

Die Landmaschine in Fig. 4 stimmt in der Ausbildung mit derjenigen gemäß Fig. 2 überein. In Fig. 2 ist nur der besseren Übersicht halber nicht das in Fig. 1 dargestellte Dreipunkt-Hubwerk 41 miteingezeichnet.

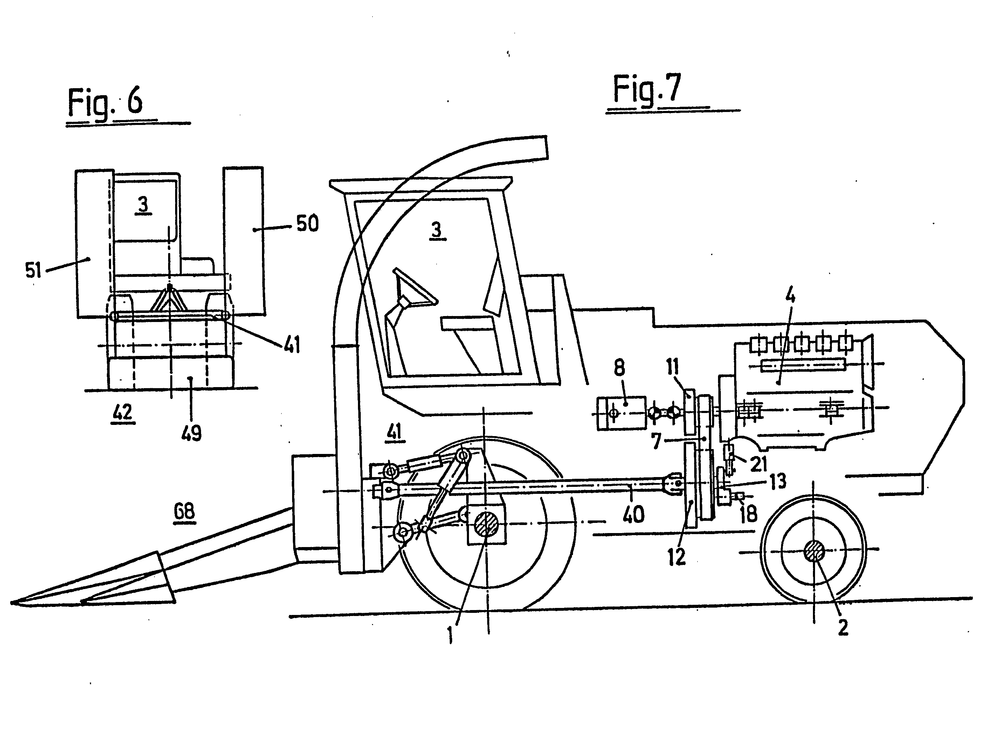

Wie aus Fig. 4 ersichtlich, kann beispielsweise an diesem Dreipunkt-Hubwerk ein Trommelmähwerk 42 angebracht werden, das seinen Antrieb vom Zapfwellenanschluß 16 erfährt. Das Trommelmähwerk 42 besteht dabei aus drei Paar Scheibenmähern 49, 50 und 51. Die äußeren Scheibenmäherpaare 50 bzw. 51 sind mittels Schwenkachsen in eine Transportstellung nach oben klappbar (Fig. 6). An der Heckseite der Landmaschine gemäß Fig. 4 ist eine Heuwerbungsmaschine 43 angeschlossen, die als Kreiselheuer mit mehreren Rechrädern ausgebildet ist. Diese Heuwerbungsmaschine 43 ist mittels einer Zugstange 44 an eine Anhängevorrichtung 45 der Landmaschine angehängt. Die Antriebsgelenkwelle 46 dieser Heuwerbungsmaschine 43 ist am Zapfwellenanschluß 17 angeschlossen und findet von dort ihren Antrieb.

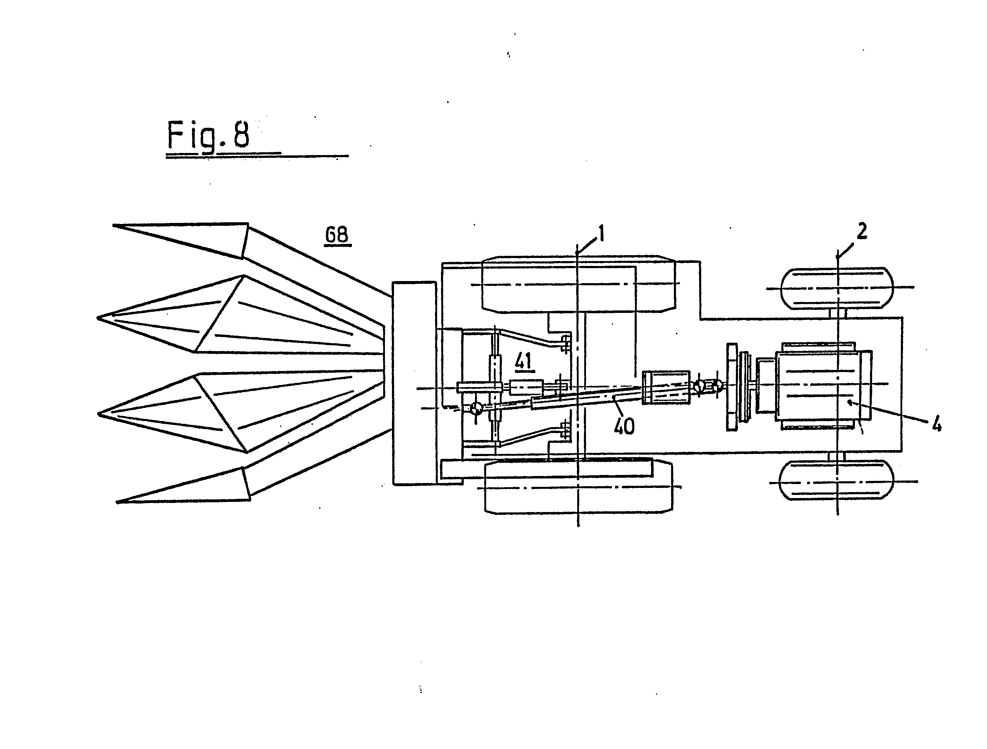

Die in den Fig. 7 und 8 gezeigte Landmaschine stimmt in seiner Ausgestaltung im wesentlichen mit der Landmaschine nach Fig. 1 überein. Sie trägt fort mittels des Dreipunkt-Hubwerkes 41 einen dreireihigen Maishäcksler 68 bekannter Bauart, der seinen Antrieb durch die Gelenkwelle 40 erfährt.

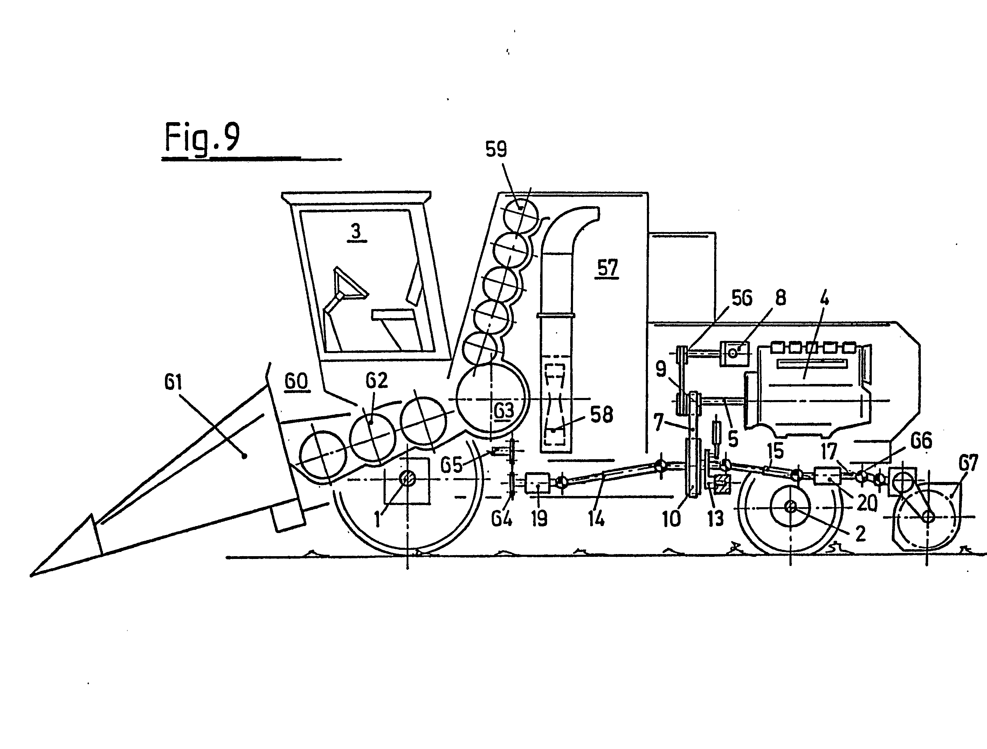

In Fig. 9 ist gezeigt, wie die Landmaschine gemäß Fig. 2 sowohl mit eingebauten als auch mit getragenen bzw. angehängten Arbeitsgeräten versehen werden kann.

Als Arbeitsgerät ist hier ein dreireihiger Maispflückschroter 60 vorgesehen, der aus einer Pflückvorrichtung 61, einer Zuführungsvorrichtung 62, einer Dreschvorrichtung 63, einer Trenn- und Austragsvorrichtung 59 für die Maislieschblätter und aus einem Wurfgebläse 58 besteht, das gleichzeitig als Häcksler oder Feinschrotmühle ausgebildet sein kann, welches das Erntegut in einen in Fahrzeugmitte befindlichen Behälter 57 befördert.

Die Pflückvorrichtung 61 wird vom Dreipunkt-Hubwerk getragen.

Die anderen Einrichtungen des Maispflückschroter, nämlich die Zuführungsvorrichtung 62, die Dreschvorrichtung 63, die Austragsvorrichtung 59 und das Wurfgebläse 58 sind in diesem Fall im Selbstfahrer eingebaut. Dies ist mit Rücksicht auf die besondere Ausgestaltung des Antriebes ohne Schwierigkeiten möglich. Dabei ist die Zuführungsvorrichtung 62 unterhalb des Führerstandes 3 angeordnet, während die Dreschvorrichtung 63, die Austragsvorrichtung 59 und das Wurfgebläse 58 hinter dem Führerstand 3 angebracht sind.

Zu erwähnen ist im Zusammenhang mit dem Beispiel nach Fig. 9 noch, daß mittels der Gelenkwelle 14 das Getriebe 19 angetrieben wird, diesem aber ein Zwischengetriebe 64 nachgeschaltet ist, das einen Zapfwellenanschluß 65 antreibt.

An den rückwärtigen Zapfwellenanschluß 17 ist mittels einer Gelenkwelle 66 ein Schlegelhäcksler 67 angeschlossen, der in bekannter Weise etwa an der Maschine angehängt oder mittels eines Dreipunkt-Anbaues an der Maschine angebracht sein kann.

Bei allen dargestellten Ausführungsbeispielen ist der Antriebsmotor 4 an der Heckseite der Landmaschine über der Hinterachse 2 angeordnet, wobei sich die Antriebsseite des Keilriementriebes 7 im Abstand unterhalb der Hauptwelle 5 des Antriebsmotors 4 befindet. Dadurch ist es möglich, alle von der Keilriemenscheibe 10 abzweigenden Gelenkwellen im unteren Bereich des Fahrzeugrahmens unterzubringen, so daß die Frontseite bzw. Heckseite der Landmaschine zum Anbau der Arbeitsgeräte freibleibt. Außerdem wird dadurch eine sehr großer freier Raum geschaffen zwischen dem Führerhaus und dem Antriebsmotor, in welchem Arbeitsgeräte auch eingebaut werden können. Dabei spielt die Verwendung eines hydraulischen Fahrantriebes ebenfalls eine nicht unwesentliche Rolle. Auch die Anordnung des Führerstandes 3 in erheblichem Abstand über der vorderen Fahrachse 1 trägt zur Bildung eines ausreichend großen Freiraumes mit bei.

Der hydraulische Fahrantrieb kann so ausgelegt sein, daß eine ausreichende Fahrgeschwindigkeit bei Abschaltung der Arbeitsgeräte erreichbar ist, was vor allem für kommunale Zwecke notwendig ist.

Anstelle des hydraulischen Fahrantriebes könnte auch ein elektrischer oder hydro-elektrischer Antrieb, d.h. ebenfalls ein ortsunabhängiger Antrieb, verwendet werden.

Die Konsole 13 könnte anstatt der Antrieb-Keilriemenscheibe 10 auch eine in verhältnismäßig weiten Grenzen schwenkbare Keilriemen-Spannrolle tragen.

Der Gesamtantrieb der Arbeitsgeräte und der Fahrachsen kann ohne besonderen Aufwand vom Führerstand 3 aus gesteuert werden. Im Stillstand der Landmaschine ist die Konsole 13 durch die Zylinder-Kolbeneinheit 21 in einer hochgeschwenkten Stellung gehalten, so daß der Keilriementrieb 7 von der Antrieb-Keilriemenscheibe 10 gelöst ist. Wenn der Antriebsmotor 4 ingangesetzt wird, vermag infolgedessen der Keilriementrieb 7 bei einer solchen Konsolenstellung nicht, die Antrieb-Keilriemenscheibe 10 in Bewegung zu stezen.

Die Hydraulikpumpe 8 läuft allerdings mit der Hauptwelle 5 des Antriebsmotors 4 mit. Wenn vom Führerstand aus durch Betätigen eines Ventils das Drucköl der Hydraulikpumpe 8 zum Hydromotor der Fahrachse 1 gelangt, setzt sich die Landmaschine in Bewegung.

Wenn auf dem Feld die Arbeitsaggregate zugeschaltet werden sollen, wird die Konsole 13 mittels der Zylinder-Kolbeneinheit 21 nach unten verschwenkt, wodurch gewissermaßen ein welches Einkuppeln der Antrieb-Keilriemenscheibe 10 erfolgt, welche dann über die Gelenkwellen 14 und 15 die entsprechenden Arbeitsgeräte antreibt.

Nun kann es vorkommen, daß ein Arbeitsgerät verstopft ist. Um diese Störung zu beseitigen, kann vom Führerstand 3 aus mittels der Zylinder-Kolbeneinheit 21 die Konsole 13 soweit nach oben verschwenkt werden, bis das Reibrad 12 am Reibrad 11 anliegt, wodurch die Gelenkwellen 14 und 15 im umgekehrten Drehsinn angetrieben werden. Der Keilriementrieb 7 wird dabei zwangsläufig lose, so daß besondere Kupplungen oder Schaltgetriebe für das Umsteuern der Drehrichtung des Antriebes der Arbeitsgeräte nicht erforderlich sind.

Anstelle eines Keilriementriebes könnte auch ein anderer flexibler Trieb Verwendung finden, der beim Schlaffwerden seine Mitnehmerwirkung verliert.

**Patentansprüche**

1. Selbstfahrende Maschine mit Arbeitsgeräten, insbesondere Landmaschine, mit mindestens zwei Fahrachsen (1, 2) und mit einem etwa oberhalb der vorderen Fahrachse (1) angeordneten Führerstand (3) sowie mit einem etwa oberhalb der hinteren Fahrachse (2) angeordneten Antriebsmotor (4), der einerseits zum Antrieb eines Energiewandlers (8) als Kraftquelle für den Antrieb mindestens einer Fahrachse und andererseits zum Antrieb mindestens eines vom Selbstfahrer getragenen, geschobenen oder gezogenen Arbeitsgerätes dient, indem die Hauptwelle des Antriebsmotors auf einer Verlängerung eine Abtriebs-Riemenscheibe (9) trägt, die über einen Riementrieb mit einer zum Antrieb des Arbeitsgeräts dienenden Antriebs-Riemenscheibe (10) in Verbindung steht, von der etwa in Längsrichtung des Selbstfahrers eine Antriebswelle für das Arbeitsgerät abzweigt, dadurch gekennzeichnet, daß die Antriebs-Riemenscheibe (10) etwa in Höhe der Fahrachsen (1, 2) unterhalb der Abtriebs-Riemenscheibe (9) angeordnet, auf einer zur Abtriebs-Riemenscheibe (9) hin bewegbaren Konsole (13) gelagert und leicht trennbar mit mindestens einer Gelenkwelle (14 bzw. 15 bzw. 40) zum Antrieb eines Arbeitsgerätes oder einer Zapfwelle (16 bzw. 17) verbunden ist und daß die Verlängerung der Hauptwelle (5) des Antriebsmotors (4) im Kraftfluß gesehen nach der Abtriebs-Riemenscheibe (9) den einen Bestandteil eines hydraulischen, hydroelektrischen oder elektrischen Antriebs bildenden Energiewandler (8) antreibt.

2. Selbstfahrende Maschine nach Anspruch 1, dadurch gekennzeichnet, daß die Gelenkwelle (40 bzw. 14 bzw. 15) mit einem als Zapfwelle (16 bzw. 17) dienenden Ende versehen ist.

3. Selbstfahrende Maschine nach Anspruch 2, dadurch gekennzeichnet, daß zwischen der Zapfwelle (16 bzw. 17) und der Gelenkwelle (14 bzw. 15) ein Getriebe (19 bzw. 20) eingeschaltet ist.

4. Selbstfahrende Maschine nach einem der Ansprüche 1 bis 3, dadurch gekennzeichnet, daß zwischen der Verlängerung der Hauptwelle (5) des Antriebsmotors (4) und dem Energiewandler (8) eine Gelenkwelle (26) eingeschaltet ist.

5. Selbstfahrende Maschine nach einem der Ansprüche 1 bis 4, dadurch gekennzeichnet, daß sowohl der Abtriebs-Riemenscheibe (9) als auch der Antriebs-Riemenscheibe (10) je ein Reibrand (11 bzw. 12) zugeordnet ist, wobei die Reibräder bei einem Bewegen der Konsole (13) bei ununterbrochenem Fahrantrieb ein die Drehrichtung des Antriebes für die Arbeitsgeräte umkehrendes Reibradgetriebe bilden.

## Revendications

1. Véhicule automoteur muni d'instruments de travail, en particulier véhicule agricole, comprenant au moins deux essieux (1, 2) et un poste de conduite (3) situé sensiblement au-dessus de l'essieu avant (1), ainsi qu'un moteur d'entraînement (4) disposé sensiblement au-dessus de l'essieu arrière (2) et servant d'une part à entraîner un convertisseur d'énergie (8) en guise de source de puissance pour l'entraînement d'au moins un essieu et, d'autre part, à entraîner au moins un instrument de travail supporté, poussé ou tracté par le véhicule automoteur, l'arbre principal du moteur d'entraînement supportant, sur un prolongement, une poulie (9) à courroie menée reliée par l'intermédiaire d'une transmission par courroie à une poulie (10) à courroie d'entraînement qui sert à entraîner l'instrument de travail et dont un arbre d'entraînement pour l'instrument de travail bifurque sensiblement dans la direction longitudinale du véhicule automoteur, caractérisé par le fait que la poulie (10) à courroie d'entraînement, disposée sensiblement à la hauteur des essieux (1, 2) au-dessous de la poulie (9) à courroie menée, est montée sur une console (13) mobile en direction de ladite poulie (9) à courroie menée et est reliée de manière aisément amovible à au moins un arbre articulé (14 ou 15 ou 40, respectivement) destiné à entraîner un instrument de travail, ou bien à une prise de force (16 ou 17, respectivement); et par le fait que le prolongement de l'arbre principal (5) du moteur d'entraînement (4) mène, après la poulie (9) à courroie menée par rapport à la trajectoire de la force, le convertisseur d'énergie (8) qui forme un composant d'un entraînement hydraulique, hydro-électrique ou électrique.

2. Véhicule automoteur selon la revendication 1, caractérisé par le fait que l'arbre articulé (40 ou 14 ou 15, respectivement) est pourvu d'une extrémité servant de prise de force (16 ou 17, respectivement).

3. Véhicule automoteur selon la revendication 2, caractérisé par le fait qu'une transmission (19 ou 20, respectivement) est intercalée entre la prise de force (16 ou 17, respectivement) et l'arbre articulé (14 ou 15, respectivement).

4. Véhicule automoteur selon l'une des revendications 1 à 3, caractérisé par le fait qu'un arbre articulé (26) est interposé entre le prolongement de l'arbre principal (5) du moteur d'entraînement (4) et le convertisseur d'énergie (8).

5. Véhicule automoteur selon l'une des revendications 1 à 4, caractérisé par le fait qu'une roue de friction (11 ou 12, respectivement) est associée aussi bien à la poulie (9) à courroie menée qu'à la poulie (10) à courroie d'entraînement, les roues de friction formant, lors d'un déplacement de la console (13) alors que l'entraînement en déplacement n'est pas interrompu, une transmission par roues de friction qui inverse le sens de rotation de l'entraînement des instruments de travail.

## Claims

1. A self-propelling machine with implements, in particular an agricultural machine, comprising at least two wheel axles (1, 2) and a driver's cab (3) arranged approximately above the front wheel axle (1), as well as a drive motor (4) which is arranged approximately above the rear wheel axle (2) and which serves, on the one hand, for powering an energy converter (8) as a power source for driving at least one wheel axle and, on the other hand, for driving at least one implement carried, pushed or drawn by the automatically propelled machine, the main shaft of the drive motor carrying, on an extension, an output belt pulley (9) which, by way of a belt drive, is connected to an input belt pulley (10) which serves for powering the implement and from which a drive shaft for the implement branches approximately in the longitudinal direction of the self-propelled machine, characterized in that the input belt pulley (10) is arranged approximately at the same level as the wheel axles (1, 2) below the output belt pulley (9), is mounted on a bracket (13), movable towards the output belt pulley (9), and is connected in a readily separable manner to at least one universal-joint shaft (14; 15; 40) for powering an implement or power take-off shaft (16; 17), and in that the extension of the main shaft (5) of the drive motor (4) drives, to the rear of the output belt pulley (9) as seen in the direction of power flow, the energy converter (8), forming a component of a hydraulic, hydroelectric or electric drive.

2. A self-propelling machine according to Claim 1, characterized in that the universal-joint shaft (40; 14; 15) is provided with an end serving as a power take-off shaft (16; 17).

3. A self-propelling machine according to Claim 2, characterized in that a gear unit (19; 20) is provided between the power take-off shaft (16; 17) and the universal-joint shaft (14; 15).

4. A self-propelling machine according to any one of Claims 1 to 3, characterized in that a universal-joint shaft (26) is provided between the extension of the main shaft (5) of the drive motor (4) and the energy converter (8).

5. A self-propelling machine according to any one of Claims 1 to 4, characterized in that a friction wheel (11; 12) is associated with the output belt pulley (9) as well as the input belt pulley (10), the friction wheels, upon movement of the bracket (13) and during uninterrupted travel drive, forming a friction wheel gear unit which reverses the direction of rotation of the drive for the implements.

# Fig. 1

# Fig. 2

## Fig. 3

# Fig. 4

# Fig. 5

Fig. 6

Fig.7

0 025 848

Fig. 8

68

1

2

41

40

4

0 025 848

6

# Fig.9

0 025 848

# Fig. 10

# Fig. 11

0 025 848